# EUROPEAN PATENT APPLICATION

(11) **EP 2 045 542 A1**
(43) Date of publication of application: **08.04.2009**
(21) Application number: 08165196.0
(22) Date of filing: 26.09.2008
(51) Int. Cl.: F24F 12/00, F24F 11/00, F24C 15/20

(54) **Cross-flow heat exchanger and method for operation thereof**

(30) Priority: 01.10.2007 DK 200701412
(71) Applicant: Poulsen, Richard, 8462 Harlev J (DK)
(72) Inventor: Poulsen, Richard, 8462 Harlev J (DK)
(74) Representative: Gregersen, Niels Henrik

(57) **Abstract**

A cross-flow heat exchanger (2) including an inlet connection (6) for outdoor air, a first ventilator (10) disposed between heat exchanger (4) and leading-in connection (12) for a house, a connection (14) for outlet from the house, an exhaust connection (18) to the surroundings and a second ventilator (16) which is disposed between heat exchanger (4) and the exhaust connection (18). In connection with the second ventilator (16), the exhaust connection (18) furthermore includes an inlet connection (20) for a cooker hood, and that between the exhaust connection (18) and the heat exchanger (4) there is provided a first regulating damper (22) controlled by an electric step motor, and which is adapted to automatically shut the heat exchanger (4) partially by activation of the cooker hood. By simple measures it is hereby possible in a simple way to achieve an improved overall function of a cross-flow heat exchanger and to combine the function of the cross-flow heat exchanger with other ventilation needs in buildings, including primarily local exhaustion, e.g. connected cooker hood.

## Description

### Field of the Invention

The present invention concerns a cross-flow heat exchanger of the kind indicated in the preamble of claim 1.

The invention also concerns a method for operating the cross-flow heat exchanger.

### Background of the Invention

According to new building regulations, a continuous permanent air change in buildings of about 20 1/s is required, and an air exchange of minimum 40 1/s by forced ventilation. Such minimum requirements to basic ventilation in buildingS will thus also exist where cross-flow heat exchangers are used with the aim of optimising the heat energy consumption.

### Purpose of the Invention

The invention has the purpose of indicating a new and improved cross-flow heat exchanger of the kind mentioned in the introduction, and which in a simple way enables achieving an improved overall function of a cross-flow heat exchanger and which enables combining the function of the cross-flow heat exchanger with other ventilation needs in buildings.

### Description of the Invention

The cross-flow heat exchanger according to the invention is characterised in that in connection with the second ventilator, the exhaust connection furthermore includes an inlet connection for a cooker hood, and that between the exhaust connection and the heat exchanger there is provided a first regulating damper controlled by an electric step motor, and which is adapted to automatically shut off the heat exchanger partially by activation of the cooker hood.

By simple measures it is hereby possible in a simple way to achieve an improved overall function of a cross-flow heat exchanger and to combine the function of the cross-flow heat exchanger with other ventilation needs in buildings, including primarily local exhaustion, e.g. a connected cooker hood.

With the object of optimising the operation, the cross-flow heat exchanger according to the invention may suitably be designed such that between the heat exchanger and the connection for outlet from the house there is provided a second regulating damper which is controlled by an electric step motor, and which is adapted to interact with an electric control including temperature sensors for outdoor temperature and indoor temperature, respectively.

And for further optimisation of the cross-flow heat exchanger according to the invention, it may advantageously be designed such that between heat exchanger and leading-in connection to the house there is provided a third regulating damper which is controlled by an electric step motor and which is adapted to interact with an electronic control including temperature sensors for outdoor temperature and indoor temperature, respectively.

The invention also concerns a method for operating the cross-flow heat exchanger, the method being characterised in that the cross-flow heat exchanger is controlled in such a way that activation of cooker hood automatically provides for the first regulating damper shutting off the heat exchanger partially, such that fat in the exhaust air from the cooker hood will not be deposited in the heat exchanger.

With the intention of avoiding cooking odour in the building, it will be an extra advantage to modify the method according to the invention in such a way that during operation of a cooker hood, injected air will automatically be distributed such that the air flow always moves towards the cooker hood from the other rooms, i.e. excess pressure is always present in the other rooms during operation of the cooker hood.

### The Drawing

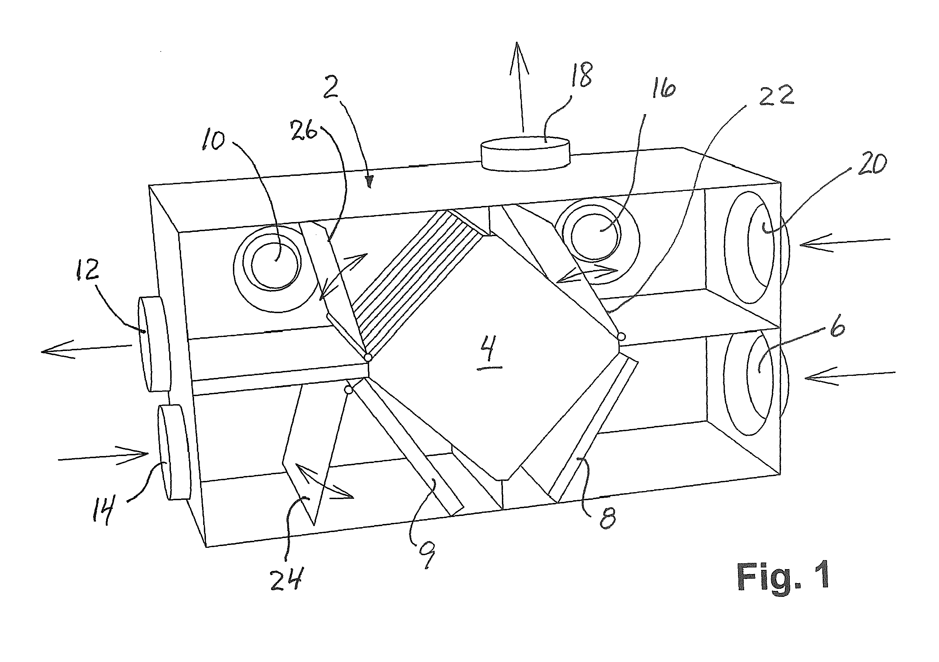

The invention is explained in more detail below in connection with the drawing, on which Fig. 1 shows a perspective view of an embodiment of a cross-flow heat exchanger according to the invention.

### Description of Embodiments

The cross-flow heat exchanger 2 shown on the drawing includes a usual central heat exchanger 4 which at an inlet opening 6 for outdoor air is connected to the surroundings. The outdoor air from the inlet opening 6 passes a dust filter 8 before a primary passage of the heat exchanger 4 and is conducted via a first ventilator 10 to a leading-in opening 12 to the house.

Via a connection 14 for outlet from the house, exhaust air passes a dust filter 9 before a second passage of the heat exchanger 4 and is conducted via second ventilator 16 to an exhaust opening 18 of the house.

In connection with the second ventilator 16, the cross-flow heat exchanger 2 includes an inlet connection 20 for a not shown cooker hood. Between the inlet connection 20 for the cooker hood and the second ventilator 16, a pivoting damper 22 with associated step motor (not shown) is arranged. A combined electronic control for cooker hood and heat exchanger 2, 4 is arranged such that by activation of the cooker hood, the pivoting damper 22 will automatically shut the heat exchanger 4 partially such that fat from the cooker hood will not be deposited in the primary passages of the heat exchanger 4.

In connection with the connection 14 for outlet from the house to the heat exchanger 4, a second regulating damper 24 with associated electric step motor (not shown) is provided, the damper 24 being adapted to interact with an electric control including temperature sensors for outdoor temperature and indoor temperature, respectively.

Also, in connection with the leading-in connection 12 to the house there is provided a third regulating damper 26 with associated electric step motor (not shown), the damper 26 being adapted to interact with an electric control including temperature sensors for outdoor temperature and indoor temperature, respectively.

With the aim of optimising the operation of the cross-flow heat exchanger 4, this is controlled in such a way that activation of cooker hood will automatically provide for the first regulating damper 22 partially shutting the heat exchanger 4 such that fat in the exhaust air from the cooker hood will not be deposited in the heat exchanger 4.

With the intention of avoiding cooking odour from the kitchen being distributed in other rooms of the building, it will be an extra advantage to modify the operation of the cross-flow heat exchanger in such a way that during operation of a cooker hood, injected air will automatically be distributed such that the air flow always moves towards the cooker hood from the other rooms, i.e. excess pressure is always present in the other rooms during operation of the cooker hood.

This function may be supported in that suction valves in adjoining rooms are automatically reduced (to e.g. 20%) such a part of the injected amount of air is forced to move from the adjoining rooms and towards the cooker hood in order to maintain the balance: Cooker hood + suction valves = injection valve. In other words, the overall control of the ventilation system of the house is effected from control panel of the cooker hood.

Finally, it is to be emphasised that it is an additional advantage of the cross-flow heat exchanger 2 according to the invention that the second ventilator 16 is common to cooker hood and outlet connection 14.

## Claims

1. A cross-flow heat exchanger (2) including an inlet connection (6) for outdoor air, a first ventilator (10) disposed between heat exchanger (4) and leading-in connection (12) for a house, a connection (14) for outlet from the house, an exhaust connection (18) to the surroundings and a second ventilator (16) which is disposed between heat exchanger (4) and the exhaust connection (18), **characterised in that** in connection with the second ventilator (16), the exhaust connection (18) furthermore includes an inlet connection (20) for a cooker hood, and that between the exhaust connection (18) and the heat exchanger (4) there is provided a first regulating damper (22) controlled by an electric step motor, and which is adapted to automatically shut off the heat exchanger (4) partially by activation of the cooker hood.

2. Cross-flow heat exchanger (2) according to claim 1, **characterised in that** between the heat exchanger (4) and the connection (14) for outlet from the house there is provided a second regulating damper (24) which is controlled by an electric step motor, and which is adapted to interact with an electric control including temperature sensors for outdoor temperature and indoor temperature, respectively.

3. Cross-flow heat exchanger (2) according to claim 1, **characterised in that** between heat exchanger (4) and leading-in connection (12) to the house there is provided a third regulating damper (26) which is controlled by an electric step motor and which is adapted to interact with an electronic control including temperature sensors for outdoor temperature and indoor temperature, respectively.

4. A method for operating a cross-flow heat exchanger according to any preceding claim, **characterised in that** it is controlled in such a way that activation of cooker hood automatically provides for the first regulating damper (22) shutting off the heat exchanger (4) partially, such that fat in the exhaust air from the cooker hood will not be deposited in the heat exchanger (4).

5. Method according to claim 4, **characterised in that** during operation of a cooker hood, injected air will automatically be distributed such that the air flow always moves towards the cooker hood from the other rooms, i.e. excess pressure is always present in the other rooms during operation of the cooker hood.
